# EUROPÄISCHE PATENTSCHRIFT

(11) **EP 3 464 858 B1**
(45) Veröffentlichungstag und Bekanntmachung des Hinweises auf die Patenterteilung: **17.02.2021**
(21) Anmeldenummer: 17724814.3
(22) Anmeldetag: 19.05.2017
(51) Int. Cl.: F02D 41/14, F02D 41/24, F02D 41/00

(54) **VERFAHREN ZUM BETREIBEN EINER IN EINEM FAHRZEUG INSTALLIERTEN VERBRENNUNGSKRAFTMASCHINE**
METHOD FOR OPERATING AN INTERNAL COMBUSTION ENGINE INSTALLED IN A VEHICLE
PROCÉDÉ POUR FAIRE FONCTIONNER UN MOTEUR À COMBUSTION INTERNE INSTALLÉ DANS UN VÉHICULE

(30) Priorität: 23.05.2016 DE 102016208834
(43) Veröffentlichungstag der Anmeldung: 10.04.2019
(73) Patentinhaber: Technische Universität Dresden, 01069 Dresden (DE)
(72) Erfinder: WALTER, Robert, 01705 Freital (DE); ROSS, Tilo, 01454 Radeberg (DE); ZELLBECK, Hans, 01705 Freital (DE)
(74) Vertreter: Pfenning, Meinig & Partner mbB
(86) Internationale Anmeldenummer: PCT/EP2017/062101
(87) Internationale Veröffentlichungsnummer: WO 2017/202716

(56) Entgegenhaltungen:
- WO-A1-2009/088437
- WO-A1-2016/005414
- DE-A1-102014 214 431
- DE-A1-102015 222 684
- US-A1- 2011 264 353
- US-A1- 2014 343 828
- Heiko Sequenz: "Emission Modelling and Model-Based Optimisation of the Engine Control", , 25. Februar 2013 (2013-02-25), XP055281312, Gefunden im Internet: URL:http://tuprints.ulb.tu-darmstadt.de/39 48/1/Emission%20Modelling%20and%20Model-Ba sed%20Optimisation%20of%20the%20Engine%20C ontrol%20-%20Dissertation%20Heiko%20Sequen z.pdf [gefunden am 2016-06-16]
- HOEL LANGOUET: "Engine calibration: multi-objective constrained optimization of engine maps", OPTIMIZATION AND ENGINEERING ; INTERNATIONAL MULTIDISCIPLINARY JOURNAL TO PROMOTE OPTIMIZATIONAL THEORY & APPLICATIONS IN ENGIN, KLUWER ACADEMIC PUBLISHERS, BO, Bd. 12, Nr. 3, 5. April 2011 (2011-04-05), Seiten 407-424, XP019926451, ISSN: 1573-2924, DOI: 10.1007/S11081-011-9140-8
- Kristian Jankov: "Beitrag zur automatisierten Steuerkennfeld-Applikation bei Fahrzeug-Dieselmotoren", , 28. August 2008 (2008-08-28), XP055036695, Gefunden im Internet: URL:http://opus.kobv.de/tuberlin/volltexte /2008/1972/pdf/jankov_kristian.pdf [gefunden am 2012-08-29]

## Beschreibung

Die Erfindung betrifft ein Verfahren zum Betreiben einer in einem Fahrzeug installierten Verbrennungskraftmaschine, insbesondere eines Dieselmotors, die bevorzugt in einem Personenkraftwagen verbaut ist.

Die stetige Verschärfung der Emissionsgrenzen begründet somit den Einsatz von entsprechenden inner- und außermotorischen Maßnahmen. Auf Grundlage der zulässigen Grenzwerte wurde im Speziellen für die NOₓ-Emission eine Reduktion um bis zu 73% zwischen 1990 und 2020 prognostiziert. Durchgeführte Messungen des Umweltbundesamtes konnten diese Vorhersagen bis dato jedoch nicht verifizieren. Besonders die verkehrsnahen, innerstädtischen NO₂-Immissionen zeigen nach wie vor gleichbleibend hohe Werte. Aufgrund dieser Tatsache, die sich hauptsächlich durch die Abweichungen zwischen den Emissionswerten in Testzyklen und im Kundenbetrieb ergibt, wird ab September 2017 im Rahmen des Zertifizierungsverfahrens auch eine Überprüfung der Abgasemissionen im realen Fahrbetrieb eingeführt, um eventuelle Applikationsunterschiede zwischen Prüfstand (Labor) und Straße (Realität) aufzuzeigen.

Die Messung der realen Emissionen von Schadstoffen neben NOₓ, wie z. B. CO, CO₂, Russ und unverbrannten Kohlenwasserstoffen am Fahrzeug erfolgt mithilfe eines mobilen Abgasmesssystems (portable emission measurement system - PEMS), das vom zulassungsrelevanten Fahrzeug mitzuführen ist. Im Vergleich zur Testprozedur auf dem Rollenprüfstand, die unter definierten und konstanten Randbedingungen abläuft, ergibt sich beim realen Fahrbetrieb eine viel größere Anzahl an Parametern, die das Betriebsverhalten der Verbrennungskraftmaschine und somit auch das Emissionsverhalten des Fahrzeugs in einem deutlich höheren Maß extrem beeinflussen. Um hierbei dem sogenannten "misuse", d. h. z. B. durch eine aggressive Fahrweise (Wechselspiel von Gas und Bremse), oder andere "worst-case"-Szenarien vorzubeugen, werden vom Gesetzgeber bestimmte Randbedingungen, sogenannte boundary conditions (BC), vorgegeben. Einflussparameter sind dabei insbesondere die Umgebungstemperatur, die Höhe über dem Meeresspiegel, die durchschnittliche Steigung der Fahrbahn, die Fahrzeuggeschwindigkeit, Kaltstart, Fahrstil, das Schaltverhalten eines Getriebes und die maximale Geschwindigkeit des Fahrzeugs. Einige dieser Parameter sind nicht plan- und vorhersehbar.

Der Einsatz von Abgasnachbehandlungssystemen (bspw. Katalysatoren) ist bei Otto- und Dieselmotoren aktueller Stand der Technik. Damit können bei ausreichender Abgastemperatur die Konvertierung der Schadstoffkomponenten: Kohlenstoffmonoxid *CO* und unverbrannte Kohlenwasserstoffe *HC* sowie bei der homogenen ottomotorischen Verbrennung (λ=1) auch Stickoxide weitestgehend sichergestellt werden. Beim Dieselmotor genügte zur Reduzierung der NOₓ-Emission bisher das Zumischen von Abgas in die Ansaugluft durch Abgasrückführung (AGR). Spätestens seit der Einführung der Euro-6-Abgasnorm im Pkw-Bereich muss jedoch auf zusätzliche außermotorische Maßnahmen zurückgegriffen werden. Dabei haben sich der NOₓ-Speicherkatalysator (NSK) für Kleinwagen und die selektive katalytische Reduktion mittels Harnstoff (SCR) für die obere Mittel- und Oberklasse durchgesetzt.

Das aktuelle Auslegungskriterium für Abgasnachbehandlungssysteme (gilt auch für alle anderen Komponenten am Pkw-Verbrennungsmotor) richtet sich maßgeblich nach dem zertifizierungsrelevanten Betriebsbereich, um dafür einen optimalen Betrieb sicherzustellen. Allerdings muss stets der Kompromiss zwischen Light-Off-Verhalten (Wärmekapazität), Wirkbereich (Raumgeschwindigkeit/Verweildauer) und Kostenfaktor berücksichtigt werden. Der abzudeckende Massenstrombereich beim Pkw-Motor erfordert aufgrund der vergleichsweise geringen Reaktionsgeschwindigkeit für die Stickoxidreduktion ein großes Katalysatorvolumen. Die benötigte Abgasenergie zur Aufwärmung steigt entsprechend und verzögert somit den Light-Off. Eine Kombination von mehreren Systemen (z. B. NSK und SCR) oder mehrstufige Systeme können an dieser Stelle Abhilfe schaffen, sind aber deutlich kostenintensiver und erfordern entsprechenden Bauraum.

Im Hinblick auf der realen Abgasemission (Real Drive Emission RDE) vergrößert sich nicht nur der Betriebsbereich im Motorenkennfeld, es werden auch die Betriebsgrenzen einiger Systeme überschritten bzw. deren Funktionsgüte (Wirkungsgrad) maßgeblich verringert.

Aufgrund eines zu hohen Abgasmassenstroms bzw. einer zu hohen Abgastemperatur ist die Reduktion der NOₓ-Emission für viele Betriebspunkte der Verbrennungskraftmaschine eingeschränkt (η_{Konv.}<95%) möglich.

Die Motorapplikation ist bis dato während des Fahrbetriebs im Normalfall weitestgehend unveränderlich. Die zusätzlich im Motorsteuergerät hinterlegten Betriebsmodi kommen u. a. ausschließlich für die intervallabhängige Regeneration der Abgasnachbehandlung, den Motornotlaufbetrieb oder den Motorkaltstart bzw. -warmlauf zum Einsatz. Neben den Zielsetzungen eines hinreichend hohen Prozesswirkungsgrads und der Einhaltung verschiedener Betriebs- und Belastungsgrenzen orientiert sich, wie bereits erwähnt, die Motivation bei der Motorsteuerungsauslegung hauptsächlich am Zertifizierungszyklus. In der Regel muss dieser Vorgang für jede Fahrzeugklasse bzw. -familie individuell durch entsprechende Modifikation erfolgen. Im Hinblick auf die bevorstehende RDE-Zertifizierung ist diese Art der Vorgehensweise zukünftig nur eingeschränkt realisierbar. Aufgrund des großen Freiheitsgrads bzgl. des Fahrprofils und der hohen Anzahl verschiedener Einflussparameter erschwert sich die Einhaltung der Emissionsgrenzwerte, und dabei insbesondere die Einhaltung der NOₓ-Grenzwerte. Darüber hinaus ist die Auslegung der Motorsteuerung für das "worst-case"-Szenario dem Kunden nicht zumutbar und hinsichtlich der CO₂-Zielsetzung nicht möglich.

Entsprechende Verfahren zur Einhaltung von Emissionsgrenzwerten werden in DE 102015222684 A1, US 2011264353 A1, DE 102014214431 A1 und WO 2016005414 A1 offenbart.

Es ist daher Aufgabe der Erfindung, Möglichkeiten für die Einhaltung der Emissionsgrenzwerte für einen im Abgas einer Verbrennungskraftmaschine enthaltenen Schadstoff und insbesondere der NOₓ-Emission bei einem Dieselmotor unabhängig von den verschiedensten Einflussgrößen anzugeben. Dabei soll auch die Fahrbarkeit eines entsprechend angetriebenen Fahrzeugs sicherstellt werden.

Erfindungsgemäß wird diese Aufgabe mit einem Verfahren, das die Merkmale des Anspruchs 1 aufweist, gelöst. Vorteilhafte Ausgestaltungen und Weiterbildungen der Erfindung können mit in untergeordneten Ansprüchen bezeichneten Merkmalen realisiert werden.

Bei dem erfindungsgemäßen Verfahren wird die momentane Konzentration eines Schadstoffes, insbesondere die NOₓ-Konzentration im Abgas in Strömungsrichtung nach einer Abgasnachbehandlung gemessen oder berechnet. Mit der bestimmten Schadstoffkonzentration wird/werden die vorgegebene strecken- und/oder leistungsbezogene Einhaltung von Schadstoffgrenzwerten in mg/km oder mg/kWh durch gezielte Beeinflussung der Betriebsparameter der Verbrennungskraftmaschine, insbesondere des Dieselmotors und/oder einer Abgasnachbehandlungsanlage in geregelter Form überwacht.

Die momentane Berechnung der NOₓ-Konzentration im Abgas kann z.B. wie in [A. Schöer: "Vorschlag einer Methode zur Berechnung der Stickoxid-Emission von Dieselmotoren"; Dissertation, Technische Universität Carolo-Wilhelmina zu Braunschweig; 1975] beschrieben, durchgeführt werden.

Mit der Erfindung ist ein Übergang von der fahrzeugindividuellen, nahezu unveränderlichen Motorapplikation hin zu einer adaptiven, universellen Betriebsstrategie erreichbar. Der wesentliche Kern stellt eine bisher noch nicht vorhandene Methode/Strategie für den Betrieb einer Verbrennungskraftmaschien dar.

Bei der Regelung sollten neben der momentanen Konzentration eines im Abgas enthaltenen Schadstoffes auch der momentane und/oder der entsprechend der jeweiligen Fahrsituation in Abhängigkeit vom jeweiligen Fahrstil, jeweiligen Fahrzeug, Fahrzeugzustand und Umwelteinflüssen vorhersehbare Kraftstoffverbrauch beim geregelten Betrieb der Verbrennungskraftmaschine berücksichtigt werden. So kann beispielsweise bei einem aggressiven Fahrstil die Regelung unter Berücksichtigung eines vorgegebenen Schadstoffgrenzwertes, insbesondere eines NOₓ-Wertes als Führungsgröße über einen längeren Zeitraum stärker die momentane Schadstoffemission reduzieren, als dies bei einem ruhigen besonnenen und vorausschauenden Fahrstil der Fall ist. Bei der Regelung sollte auch der momentane Zustand der Abgasnachbehandlungsanlage, insbesondere deren Alterung, die Kraftstoffqualität und/oder die Menge, Art und/oder Qualität der der Abgasnachbehandlung für eine Stickoxidreduktion zugeführten chemischen Verbindung (z.B. AdBlue) bei der Regelung berücksichtigt werden.

Es kann eine Beeinflussung der eingespritzten Kraftstoffmenge, des Einspritzzeitpunktes, die Art der Kraftstoffeinspritzung, der Ladedruck zugeführter Verbrennungsluft, die Temperatur der Verbrennungsluft, der Temperatur und/oder der Menge an rückgeführtem Abgas, der Ventilsteuerzeiten und/oder des Motorverdichtungsverhältnisses durchgeführt werden.

Mit der Erfindung erschließt sich die Möglichkeit einer Regelung des Betriebs einer Verbrennungskraftmaschine unter Berücksichtigung der jeweiligen Uhrzeit und/oder jeweiligen Fahrzeugposition durchzuführen, indem ein entsprechend zugeordneter Schadstoffgrenzwert berücksichtigt wird. So kann beispielsweise innerhalb von Ortschaften, einer Umweltzone oder einem Naturschutzgebiet ein niedrigerer NOₓ-Grenzwert bei der Regelung berücksichtigt werden, als dies außerhalb solcher Regionen der Fall ist. In der Nacht kann unter Berücksichtigung eines höheren NOₓ-Grenzwertes geregelt werden, als dies am Tage der Fall ist.

Für die Regelung können in der Motorsteuerung hinterlegte Motorkennfelder, bei denen die jeweilige Motordrehzahl und die Motorlast, die unterschiedliche Varianten für den Betrieb des Dieselmotors berücksichtigen, genutzt werden.

Bei der Regelung kann eine Interpolation durchgeführt werden, wenn kein dem jeweiligen Betriebszustand der Verbrennungskraftmaschine entsprechendes Motorkennfeld in der Motorsteuerung vorhanden ist.

Eine Auswahl derjeweiligen Variante bei der Regelung unter Berücksichtigung der Regeldifferenz ohne Interpolation zwischen den Varianten, in Abhängigkeit der Regeldifferenz mit entsprechender Interpolation oder eine Umrechnung der Führungsgröße in einen betriebspunktabhängigen Sollwert für die Rohemission an Schadstoff, wie z.B. NOₓ in [g/(kW.h)] und entsprechender Modifikation in Abhängigkeit der Regeldifferenz durchgeführt werden. Die Regeldifferenz beschreibt die Abweichung zwischen Soll- und Istgröße, d. h. der Unterschied zwischen Grenzwert und aktuellem Wert der streckenbezogenen Schadstoffemission (z.B.: Δ_{Regeldifferenz} = NO_{x,Grenzwert} - NO_{x,aktueller}__{wert} in [g/km]).

Ausgangspunkt für das Verfahren stellt dabei die in Echtzeit erfolgende Überwachung der realen Schadstoffkonzentration im Abgas mittels Berechnung oder Sensoren im Abgasstrang nach einer vorhandenen Abgasnachbehandlung dar. Durch die Integration (Kumulierung) dieser Werte unter Berücksichtigung der jeweiligen zurückgelegten Wegstrecke ist somit der Abgleich mit den einzuhaltenden Grenzwerten möglich. Je nach Überschreitung des Grenzwerts oder dem entsprechenden Abstand (Regeldifferenz) wird die Motorsteuerung angepasst, um z. B. den jeweils möglichst optimalen Kompromiss zwischen CO₂- und NOₓ-Emission einzuhalten.

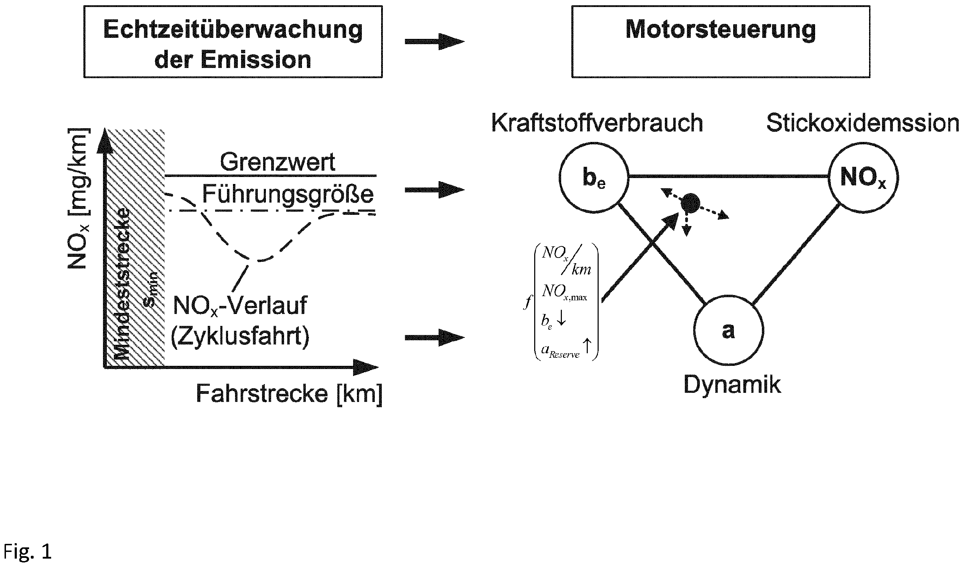

Konkret bedeutet das: Für die Motor-Fahrzeug-Kombination kommt nicht mehr nur eine "optimierte" Motorapplikation zur Anwendung, sondern es wird eine Regelung des Dieselmotors in Abhängigkeit der jeweiligen Schadstoffemission durchgeführt, wobei auf innerhalb der elektronischen Motorsteuerung hinterlegte Motorbetriebskennfelder zurück gegriffen werden kann. Die gewählte Betriebsstrategie kann dabei verschiedene Teilapplikationen mit unterschiedlichen Optimierungsschwerpunkten umfassen und dadurch auch unabhängig vom Fahrzeug bleiben. Je nach Zielwert kann zwischen den einzelnen Applikationen umgeschaltet oder aufgrund der Regelung interpoliert werden. Dabei findet, wie in Figur 1 schematisch am Beispiel der NOₓ-Emission dargestellt, eine kontinuierliche Optimierung zwischen hohem Prozesswirkungsgrad, niedriger Stickoxidrohmission und verfügbarer Motordynamik unter Berücksichtigung der aktuellen wegspezifischen Schadstoffemission statt. Bei einem vorgegebenen NOₓ-Grenzwert kann ein kleinerer NOₓ-Wert als Führungsgröße gewählt werden. Wie insbesondere aus dem links in Figur 1 gezeigten Diagramm erkennbar kann der eigentlich maximal zulässige NOₓ-Grenzwert während des Motorbetriebs, beispielsweise während der Warmlaufphase auch kurzzeitig überschritten werden. Es sollte jedoch gesichert sein, dass der NOₓ-Grenzwert kumulativ über eine vorgegebene Mindestfahrstrecke, bevorzugt von mindestens 2 km eingehalten wird. Der rechten Darstellung von Figur 1 kann man entnehmen, dass die Regelung des Dieselmotors während des Betriebes so erfolgen soll, dass neben dem NOₓ-Grenzwert auch der CO₂-Ausstoß über den Kraftstoffverbrauch bₑ berücksichtigt werden kann und gleichzeitig auch ein sicheres Fahren eines mit dem Dieselmotor angetriebenen Fahrzeugs möglich sein.

Dabei sollte die Regelung so erfolgen, dass der kumulierte NOₓ-Grenzwert über die gesamte Fahrstrecke und vor allem beim Beenden der Fahrt eingehalten wird. Dabei sollte eine Mindestfahrstrecke von 2 km berücksichtigt werden. Der maximal gemessene oder berechnete NOₓ-Wert muss dabei also nicht zu jedem Zeitpunkt unterschritten sein. Insbesondere kurzzeitige Überschreitungen bei bestimmten Fahrsituationen können auftreten und toleriert werden, wenn der Mittelwert unterhalb des jeweiligen vorgegebenen NOₓ-Grenzwerts liegt.

Die größte Herausforderung in der Dieselmotorenentwicklung ist die konsequente Darstellung minimaler NOₓ-Emission bei gleichzeitig niedrigem CO₂-Ausstoß.

Neben den bereits erwähnten Mitteln zur Reduzierung der NOₓ-Emission kann bei der Regelung des Dieselmotors eine Abgasrückführung mit entsprechend angepasster Abgasrückführungsrate unter Berücksichtiung des jeweiligen momentanen berechneten oder gemessenen NOₓ-Wertes des Abgases unmittelbar vor dem Austreten in die Umgebung, also unter Berücksichtigung aller durchgeführten Abgasnachbehandlungen, wie z. B. der Separation von Partikeln und der SCR-Technologie. Bei entsprechender Auslegung und Dimensionierung des Abgasnachbehandlungssystems sind ein Verzicht auf die innermotorische Reduktion der NOₓ-Emission durch AGR und damit ein "SCR-ONLY"-Betrieb realisierbar. Die deutlich größere Spreizung des generierbaren Abgasmassenstroms bei Verbrennungsmotoren mit Pkw-Anwendung bedingt jedoch, dass weiterhin, wie bereits aufgeführt, ein Auslegungskompromiss bzgl. der Katalysatorgröße eingegangen werden muss.

Konventionelle Systeme mit Dimensionierungsschwerpunkt auf einem bestimmten Testzyklus erreichen im RDE-Betrieb schnell die Wirkungsgrenze. Aus diesem Grund ist eine Kombination zwischen Abgasnachbehandlungssystem und dem Einsatz von AGR mit einer Erweiterung bis hin zur Motorvolllast (Hochlast-AGR) wünschenswert.

Es ist allgemein bekannt, dass die AGR zur Steigerung des Kraftstoffverbrauchs und der Partikelemission führt. Letzteres wird zwar durch den Einsatz eines Partikelfilters wieder vollständig reduziert, bewirkt aufgrund der notwendigen, intervallmäßigen Regeneration (Rußabbrand) aber ebenfalls eine Zunahme der CO₂-Emission. Folglich sollte eine gesamtheitliche Berücksichtigung von inner- und außermotorischer Schadstoffminimierung erfolgen.

Zur genaueren Bewertung des AGR-Einflusses und der -Wirkung auf die Verbrennung sowie die Abgasemission wurden verschiedene Versuchsreihen an einem Einzylinderversuchsmotor und auf dem hochdynamischen Motorenprüfstand an einem abgasturboaufgeladenen 2.01-Dieselmotor mit Common-Rail-Direkteinspritzung sowie Hochdruck- und gekühlter Niederdruck-AGR durchgeführt.

Die innermotorische Beeinflussung der NOₓ-Emission basiert weitestgehend auf dem Zeldovich-Mechanismus und hängt damit hauptsächlich von der Verbrennungstemperatur ab. Für die notwendige Temperaturabsenkung zur Reduzierung der Stickoxidemission stehen verschiedene Möglichkeiten zur Verfügung. So kann die Verdichtungsendtemperatur durch Absenken der Ladelufttemperatur mittels Ladeluftkühler verringert werden. Diese Maßnahme beschränkt sich jedoch bei vertretbarem Energieaufwand auf das Abkühlen der Ladeluft bis maximal auf das Umgebungstemperaturniveau. Auch die Verwendung von Miller- oder Atkinson-Ventilsteuerzeiten bzw. homogene oder teilhomogene Brennverfahren sind mit Einschränkungen im Volllast- und Nennleistungsbereich bei der NOₓ-Reduzierung zielführend einsetzbar. Die einflussreichste und einfach realisierbare Maßnahme zur Reduzierung der NOₓ-Emission am Pkw-Dieselmotor ist das Zurückführen von Abgas (AGR) in den Ansaugtrakt. Die dadurch erreichte Zunahme des Inertgasanteils im Brennraum senkt den Sauerstoffpartialdruck und erhöht deutlich die Wärmekapazität des Ladungsgemischs. Infolgedessen verringert sich die Verbrennungsspitzentemperatur. Der geringere Sauerstoffanteil fördert jedoch gleichzeitig die Bildung anderer Schadstoffkomponenten, vor allem aber die Entstehung von Ruß. Demnach unterliegt die Höhe der Abgasrückführung (AGR-Rate) einem permanenten Kompromiss. Die Wassereinspritzung in den Brennraum mit vergleichbarer Wirkweise könnte diesbezüglich Abhilfe schaffen. Jedoch ist aufgrund bestehender Herausforderungen (z. B. die Wasserbereitstellung) eine Serientauglichkeit bis dato noch nicht gegeben.

Zusätzlich kann - im Vergleich zur reinen Substitution des Sauerstoffs durch zurückgeführtes Abgas - bei Steigerung der AGR-Rate mit gleichzeitig eingehaltenem konstanten Luftverhältnis, die Erhöhung der Rußpartikelemission beschränkt werden. Im Hinblick auf eine gleichbleibende Rußemission sollte der Ladedruck zugeführter Verbrennungsluft noch weiter erhöht werden λ↑), wobei sich damit wiederum die erreichbare NOₓ-Emissionsreduzierung verringert. Darüber hinaus kann bei der Steigerung der AGR-Rate mit konstantem Luftverhältnis eine Zunahme des Verbrennungswirkungsgrads und somit eine Abnahme des spezifischen Kraftstoffverbrauchs in allen Betriebspunkten erreicht werden.

Im Gegensatz zum Einzylinderversuchsmotor erweitert sich an Mehrzylindermotoren der Einflussbereich des innermotorischen Prozesses. Das betrifft hauptsächlich den Ladungswechsel und die jeweiligen Strömungsmaschinen des Abgasturboladers oder eines gesondert angetriebenen Verdichters für zugeführte Verbrennungsluft. Je nach gefördertem Ansaugvolumenstrom und Abgasenthalpiestrom ergeben sich für den Ladungswechsel unterschiedliche Bedingungen, die einen direkten Einfluss auf den Prozesswirkungsgrad besitzen. Daraus resultiert, dass etwaige Vorteile, die sich bei den Untersuchungen am Einzylinderversuchsmotor zeigen, wieder kompensiert oder sogar überkompensiert werden. Vor allem Betriebspunkte mit hoher Ladedruckanforderung lassen sich am Mehrzylindermotor nicht ohne weiteres realisieren.

Bei einem Mehrzylindermotor nimmt der spezifische Kraftstoffverbrauch mit steigender AGR-Rate zunächst ab und steigt bei deutlich höheren AGR-Raten wieder an. Der notwendige, höhere Ladedruck erfordert ein stärkeres Aufstauen des Abgasstroms vor der Turbine und bewirkt somit einen Anstieg des Abgasgegendrucks. Bis zu einer AGR-Rate von ca. 24% steigen (im Betriebspunkt mit einer Motordrehzahl von 2100 min⁻¹ und 7 bar effektiver Mitteldruck) Lade- und Abgasgegendruck etwa gleich an, sodass für den Ladungswechsel kein Nachteil bzw. nahezu keine Veränderung eintritt. Im Vergleich zum Betrieb ohne AGR ergibt sich bei der Abnahme der NOₓ-Emission von etwa 75% ein Verbrauchsvorteil von ca. 2%.

Die Zurückführung von Abgas über eine Niederdruck-AGR-Strecke kann zur Steigerung des Volumenstroms an den Strömungsmaschinen eines Aufladungssystems führen. Gleichzeitig kann der jeweilige Betriebspunkt im Verdichterkennfeld zu höheren Druckverhältnissen verschoben werden. Obwohl sich dadurch die Wirkungsgrade von Verdichter und Turbine maßgeblich verbessern lassen, folgt für den Ladungswechsel keine erkennbare Veränderung. Erst bei deutlich höheren AGR-Raten (>24%) vergrößert sich der Ladungswechselmitteldruck aufgrund des überproportional steigenden Abgasgegendrucks. Das zurückgeführte Abgas bewirkt unter der Voraussetzung eines konstanten Luftverhältnisses die Zunahme der Ladungsdichte im Zylinder. Folglich können die Kompressionsend- und Spitzentemperatur während der Verbrennung durch die höhere Wärmekapazität des Ladungsgemischs verringert werden. Damit verringert sich der Temperaturgradient zwischen den den Brennraum begrenzenden Bauteilen und dem Verbrennungsgasgemisch. Folglich nehmen die Wandwärmeverluste ab, obwohl der gasseitige Wärmeübergangskoeffizient u.a. aufgrund der höheren Ladungsdichte, ansteigt. Der innermotorische Wirkungsgrad kann somit gesteigert werden.

Eine generelle Übertragbarkeit auf weitere Betriebspunkte im Motorenkennfeld ist von den existierenden Grenzen u.a. bzgl. Ladedruck, Abgasgegendruck und Verdichteraustrittstemperatur sowie weiteren Eigenschaften des Abgasturboladers oder Verdichters abhängig. Auch die Aufteilung zwischen Niederdruck- und Hochdruck-AGR und der Einsatz entsprechender AGR-Kühlung besitzen einen Einfluss.

Weiterhin ist die Zunahme des Kraftstoffverbrauchs aufgrund kürzerer Regenerationsintervalle des Dieselpartikelfilters (DPF) durch eine höhere Partikelemission zu beachten. Eine Verdoppelung des Rußeintrags in den DPF erhöht die CO₂-Emission üblicherweise um durchschnittlich etwa 2%. Anhand der aufgeführten Zusammenhänge ist die Zielstellung einer niedrigen NOₓ-Emission und eines geringen Kraftstoffverbrauchs bei gleichzeitiger sicherer Unterschreitung der gesetzlich vorgegebenen Grenzwerte nur durch die Überwachung der streckenspezifischen Emission und entsprechender geregelter Anpassung der Motorsteuerung zu realisieren.

Im Folgenden finden die genannten Erkenntnisse bei der Modellerstellung und Methodenuntersuchung Berücksichtigung.

Der Entwicklungs- und Applikationsaufwand für die Automobilhersteller vergrößert sich durch die Real-Driving-Emissions-Gesetzgebung signifikant. Dies betrifft hauptsächlich die Ausrüstung von Fahrzeugen mit mobiler Abgasmesstechnik, die Durchführung entsprechender Versuchsfahrten und den Aufwand für die Hinterlegung zusätzlicher Kennfelddaten für den Betrieb des jeweiligen Dieselmotors. Vor diesem Hintergrund ist eine Verlagerung bzw. Abbildung des realen Fahrbetriebs auf einen hochdynamischen Motorenprüfstand unter Berücksichtigung der verschiedenen Einflussparameter (Steigung, Kurvenfahrt, Wind, etc.) möglich und sinnvoll.

Dadurch kann der technische, finanzielle und zeitliche Aufwand bei der Emissionsmessung in der Erprobungs- bzw. Entwicklungsphase deutlich reduziert werden.

Nachfolgend soll die Erfindung beispielhaft näher erläutert werden.

Dabei zeigen:
Figur 1 eine schematische Darstellung zur geregelten Anpassung der Motorsteuerung für die Einhaltung des vorgeschriebenen Stickoxidgrenzwerts im realen Fahrbetrieb;
Figur 2 einen Vergleich von Messung und Simulation für die spezifischen CO₂- und NOₓ-Emission bei verschiedenen Fahrzyklen;
Figur 3 schematisch die Einbindung des MATLAB/SIMULINK-Modells zur Steuerung des Motors in ein 1D-Simulationsmodell;
Figur 4 ein gekoppeltes Modell zur Berechnung von Fahrzyklen (Fahrzeugmodell - Motorbetriebsmodell - Applikationsmodell) und
Figur 5 ein Diagramm von Emissionen über eine vorgebbare Zykluszeit.

Die Grundlage für ein entwickeltes Modell zur Berechnung des Motorprozesses sowie die durchgeführten Untersuchungen bildete ein Vierzylinder-Dieselmotor mit Common-Rail-Direkteinspritzsystem und Abgasturboaufladung. Der 2,0I-Reihenmotor erreicht ein maximales Volllastdrehmoment von 330 Nm und stellt im Nennleistungspunkt bis zu 110kW bereit. Zur Kühlung der verdichteten Ansaugluft kommt dabei serienmäßig ein Wasser/Luft-Ladeluftkühler zum Einsatz, der in einem separaten Niedertemperaturkreislauf betrieben wird. Die innermotorische Minderung der NOₓ-Emission erfolgt über ein kombiniertes AGR-System, das sich aus einer Niederdruck- und einer Hochdruckabgasrückführung (ND- und HD-AGR) zusammensetzt. Im Fall der ND-AGR wird der nach dem DPF entnommene Abgasteilstrom vor der Einleitung in den Verdichtervorlauf mittels Wärmeübertrager gekühlt. Zusätzlich realisiert teilweise eine Stauklappe im Abgasstrang das hierfür notwendige Druckgefälle. Die Hochdruck-AGR ist ungekühlt ausgeführt und damit rückgeführtes Abgas wird nach dem Ladeluftkühler und vor den Einlasskanälen in die Zylinder eingeleitet. Für die außermotorische Reduktion der Schadstoffemission (CO, HC, Ruß) sind der Dieseloxidationskatalysator (DOC) und der darauffolgende DPF motornah angeordnet. Der Motor erfüllt mit dem genannten Abgasnachbehandlungssystem die Abgasnorm Euro-5.

Das entwickelte Simulationsmodell in der Simulationsumgebung GT-SUITE/GT-POWER (Version 7.4.0, Build 4) umfasst alle relevanten Komponenten des Verbrennungsmotors. Angefangen von der realitätsnahen Darstellung des Ladungswechsels und der Modellierung der verschiedenen Wandwärmeübergänge und Wärmekapazitäten werden der Verbrennungsprozess und die Abgasrohemission mithilfe von phänomenologischen Modellen prädiktiv berechnet. Die erforderliche Kalibrierung und Validierung erfolgte anhand verfügbarer Messdaten vom hochdynamischen Motorenprüfstand. Unter dem Gesichtspunkt der allgemeinen Vorausberechenbarkeit und qualitativen Abschätzung kann so eine hinreichend gute Übereinstimmung erzielt werden.

Für die Darstellung bzw. Simulation von Fahrzyklen diente ein Fahrzeugmodell. Das in MATLAB/SIMULINK für den hochdynamischen Motorenprüfstand entwickelte Modell wurde über geeignete Schnittstellen mit dem Motormodell der 1D-Simulation gekoppelt. Alle relevanten Eigenschaften des Fahrzeugs und des Antriebstrangs (z. B. Getriebe und Kupplung) sowie die bei der Realfahrt auftretenden Randbedingungen bildete das Fahrzeugmodell ab. Ein integriertes Fahrermodell übernimmt die Aufgabe der Geschwindigkeitsreglung. In Abhängigkeit der Geschwindigkeitsdifferenz (vᵢₛₜ-vₛₒₗₗ) wird die berechnete Drehmomentanforderung an das Motorbetriebsmodell übergeben. Mithilfe des Rückgabewerts - das im Motorbetriebsmodell berechnete Drehmoment - ermittelt das Fahrzeugbetriebsmodell die Geschwindigkeit sowie die entsprechende Motordrehzahl. Letztere wird ebenfalls dem Motorbetriebsmodell vorgegeben.

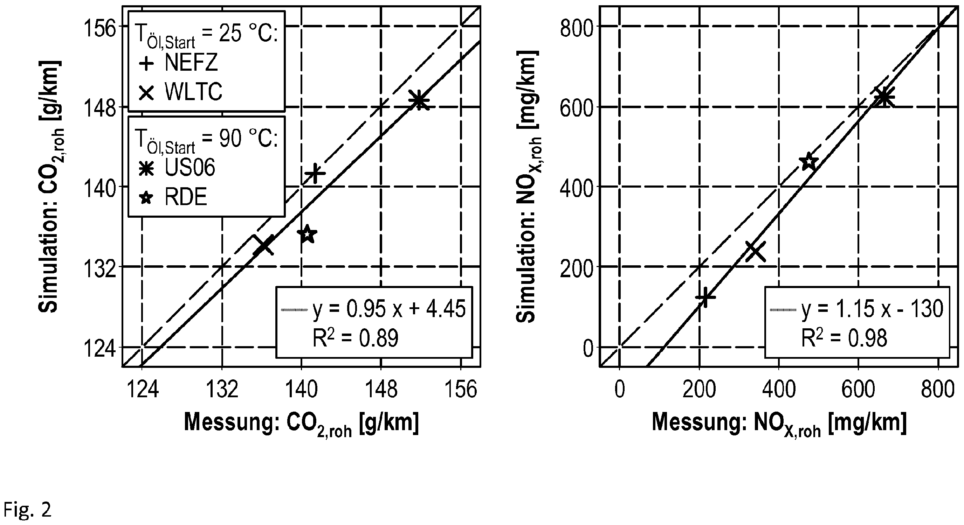

In Figur 2 sind exemplarisch für verschiedene Fahrzyklen die streckenspezifische Emission von CO₂ und NOₓ für ein aktuelles Mittelklassefahrzeug dargestellt und dabei ein Vergleich von Messung und Simulation für die spezifischen CO₂ und NOₓ-Emission bei verschiedenen Fahrzyklen angegeben. An dieser Stelle ist anzumerken, dass sich die geringen existierenden Abweichungen zwischen Messung und Simulation aus der zuvor genannten stationären Validierung für diesen Vergleichsfall kumulieren und sich damit ein sehr gutes Ergebnis darstellen lässt.

Die Umsetzung der eingangs gestellten Zielsetzung kann mit einem weiteren Steuerungsmodell erreicht werden, das auf verschiedenen Varianten der Motorapplikation basiert. Hierfür sollten Applikationen mit niedrigem spezifischem Kraftstoffverbrauch, d.h. hohem Prozesswirkungsgrad, mit niedriger NOₓ-Emission sowie Zwischenvarianten erstellt werden.

Die nachfolgenden Ausführungen sollen beispielhaft ein mögliches Applikationsverfahren demonstrieren und stellen keinen Anspruch auf Vollständigkeit dar. Der Begriff "Variante" wird im Folgenden für die jeweilige Version der Motorapplikation verwendet und ist mit V0.0 bis V 1.0 spezifiziert. Die Auslegung, Umsetzung und Erprobung erfolgt dabei ausschließlich mithilfe einer Motorprozesssimulation.

Die Applikation V0.3 bildet den Ausgangspunkt der Variantenentwicklung und entspricht im Wesentlichen der Applikation des zugrunde gelegten Basismotors. Davon abgeleitet wurde eine verbrauchsspezifisch beste Variante (V0.0) generiert, die u.a. bzgl. Verbrennungsschwerpunkt und AGR-Rate in den zulässigen Grenzen (Luftverhältnis, Zylinderdruckanstieg, etc.) optimiert ist. Für den motorischen Betrieb mit minimaler NOₓ-Emission sollte die AGR-Rate soweit erhöht werden, bis sich die gewünschte NOₓ-Emission eingestellt hat. Gleichzeitig sollte eine Erhöhung des Ladedrucks erfolgen, um das Verbrennungsluftverhältnis im Vergleich zur Basisvariante konstant zu halten. Übersteigt eine Sollgröße den vorgegebenen Grenzwert, reduziert sich das Drehmoment auf den zuletzt darstellbaren Betriebspunkt des Dieselmotors. Weiterhin verlaufen die Isolinien (Linien mit konstanter AGR-Rate) im generierten AGR-Kennfeld konträr zur Basis parallel zum effektiven Mitteldruck. Die Stickoxidrohemission kann dadurch nahezu unabhängig von der Motordrehzahl gehalten werden. Zur Verbesserung der Regelungsgüte des Modells kann darüber hinaus eine Applikation V0.7 mit interpolierten AGR-Raten zwischen der Basisvariante (V0.3) und der Variante mit minimaler NOₓ-Emission (V1.0) gebildet werden. Die Auslegung der Verteilung zwischen ND- und HD-AGR kann im Hinblick auf den optimalen Wirkungsgradbereich für Verdichter und Turbine erfolgen.

Varianten des Motorbetriebs mit identischer Aufteilung zwischen ND- und HD-AGR sowie die erreichbaren Volllastkurven, bei einer verbrauchsoptimalen bis hin zu minimaler NOₓ-Emission können an zwei ausgewählten Teillastbetriebspunkten die Unterschiede der einzelnen Varianten erkannt werden. Mit abnehmender NOₓ-Emission erhöht sich der spezifische Kraftstoffverbrauch kontinuierlich. Gleichzeitig bleibt das Luftverhältnis (mit Einschränkungen bei der verbrauchsoptimalen Variante) konstant.

Neben den Emissionsunterschieden weisen die verschiedenen untersuchten Varianten deutliche Unterschiede hinsichtlich des dynamischen Verhaltens auf. Insbesondere die Regelung auf hohe AGR-Raten im Bereich der Volllast verzögert den Ladedruckaufbau und vergrößert somit die Zeit, bis das gewünschte Drehmoment erreicht wird. Zusätzlich spielt die Vorgabe der AGR-Rate während der Lastaufschaltung eine entscheidende Rolle. Die Reduzierung der Rate bei existierender Ladedruckdifferenz führt zwar zu einem besseren dynamischen Verhalten und einer geringeren Rußemission, bewirkt aber gleichzeitig eine höhere NOₓ-Emission. Anhand eines Elastizitätstests bei einer Beschleunigung des Fahrzeugs treten Unterschiede auch wegen des Einflusses der AGR-Rücknahme (AGR-Reduzierung) während der Lastaufschaltung sowie der verwendeten Schaltstrategie (mit und ohne Zurückschalten) auf. Höhere AGR-Sollwerte vergrößern die Zeit bis zum Erreichen der Zielgeschwindigkeit zunehmend. Gleichzeitig ist eine deutliche Abnahme der NOₓ-Emission mit einhergehender signifikanter Erhöhung der Ruß-Emission zu verzeichnen. Ein Verzicht auf die Reduzierung der AGR verstärkt diesen Effekt. Der zeitliche Verzug kann durch das Zurückschalten zu größeren Getriebeübersetzungen vermindert werden, wobei die NOₓ-Emission aufgrund des niedrigeren Motordrehmoments abnimmt, die Partikel- und CO₂-Emission erhöhen sich jedoch dabei.

Das erstellte bereits angesprochene Simulationsmodell enthält für die Steuerung und Regelung der jeweiligen Prozessgrößen verschiedene Motorkennfelder. Über den Sollwerten Motordrehzahl und Motorlast sind Führungs- und Vorsteuergrößen, wie z. B. Ladedruck, AGR, Position des Ladedruckstellers/VTG-Stellung, Brennstoffmasse und Einspritzzeitpunkte, abgelegt. Für die gleichzeitige Bereitstellung der verschiedenen Applikationsvarianten werden die genannten Motorkennfelder in einem MATLAB/SIMLINK-Modell übertragen. Dem 1D-Simulationsprogramm können über eine entsprechende Schnittstelle ausschließlich die Sollwerte zur Verfügung gestellt werden, die der gewählten Variante entsprechen. Außerdem berechnet das Modell die streckenspezifischen Emissionen und ermöglicht die Umsetzung zur Steuerung bzw. Regelung der Varianten.

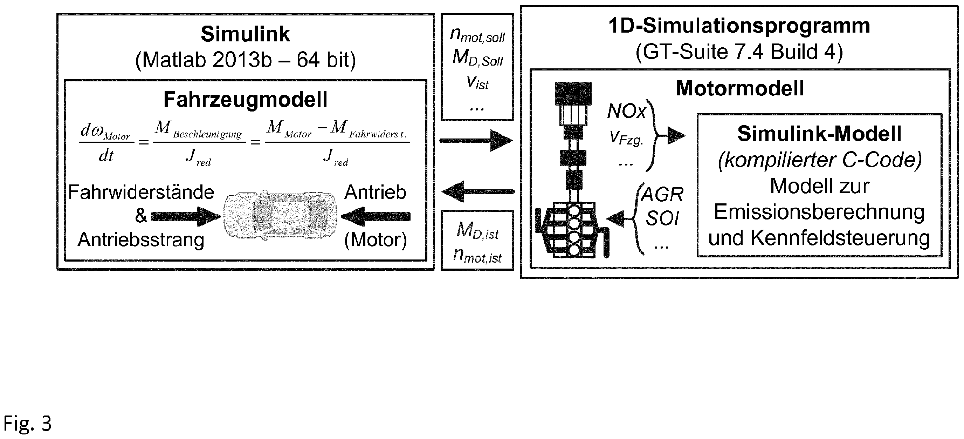

Die Figur 3 zeigt schematisch die Einbindung des MATLAB/SIMULINK-Modells zur Steuerung des Motors in das 1D-Simulationsmodell, die Ankopplung zum Fahrzeugmodell sowie die übergebenen Prozess- und Steuergrößen.

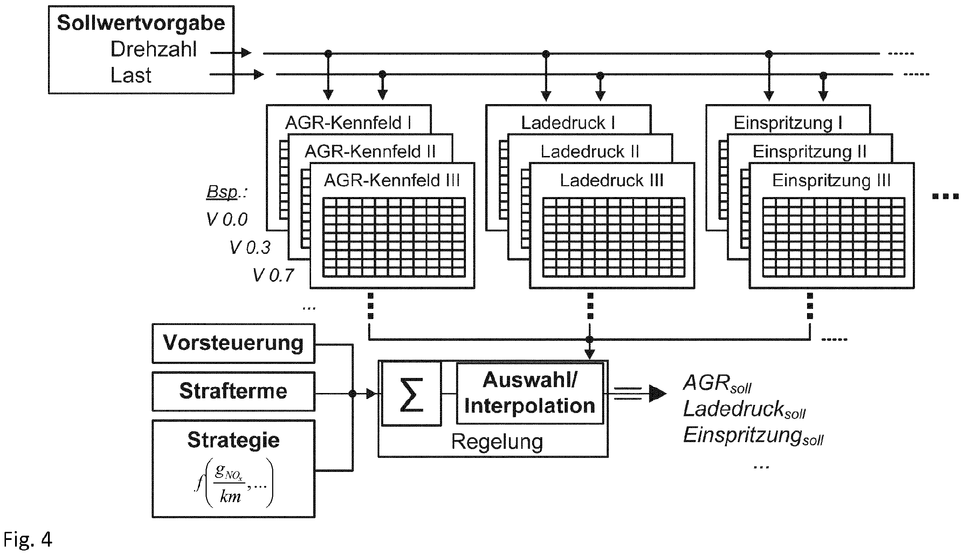

Die verschiedenen, generierten Varianten sind, wie zuvor erläutert, in diversen Motorkennfeldern im MATLAB/SIMLINK-Modell abgelegt. Entsprechend der gewählten Variante sowie den Sollwerten für Motordrehzahl und Last können die Prozesssteuergrößen (z. B. AGR-Rate) aus den jeweiligen Motorkennfeldern entnommen und an das Motorbetriebsmodell weitergegeben werden. Für den Fall, dass für die vorgegebene Variante keine Motorkennfelder existieren, ist die Interpolation zwischen den Werten benachbarter Motorkennfelder möglich. Figur 4 veranschaulicht schematisch dieses Vorgehen. Grundlage für die Wahl bzw. Steuerung der jeweiligen Varianten stellt die kontinuierliche Überwachung der Abgasemission dar. Die berechneten Emissionswerte vom Motorbetriebsmodell werden durch das MATLAB/SIMULINK-Modell erfasst, zeitlich integriert, auf die zurückgelegte Fahrstrecke bezogen und dient für den Motorbetrieb als Regelgröße.

Als Führungsgröße für die Variantensteuerung dient die Vorgabe des einzuhaltenden NOₓ-Grenzwerts in [g/km]. Für die Umsetzung der Regelung und ggf. Steuerung wurden drei verschiedene Regelungsversionen näher untersucht:
**#a** Variantenumschalten in Abhängigkeit der Regeldifferenz (ohne Interpolation zwischen den Varianten)
**#b** Regelung der Varianten in Abhängigkeit der Regeldifferenz mit entsprechender Interpolation
**#c** Umrechnung der Führungsgröße in einen betriebspunktabhängigen Sollwert für die Rohemission in [g/(kW.h)] und entsprechender Modifikation in Abhängigkeit der Regeldifferenz.

Im letztgenannten Fall wird in Abhängigkeit einer hinterlegten Fahrwiderstandskurve die Führungsgröße in einen Sollwert für die Stickoxidrohemission in [g/(kW.h)] umgerechnet. Anhand des Vergleichs mit der vorausberechneten, aktuellen Stickoxidrohemission, die im einfachsten Fall auch in entsprechenden Kennfeldern für jede Variante ablegt sein kann, erfolgt die Wahl der notwendigen Variante. Unter Annahme eines kontinuierlichen Übergangs zwischen den Varianten bzgl. der NOₓ-Emission ist auch eine Varianteninterpolation, d. h. Interpolation zwischen den Vorgabemotorkennfeldern, zulässig. Zusätzlich modifiziert ein stetig linearer Regler PID-Regler die Führungsgröße momentane NOₓ-Emission mithilfe eines nachgeschalteten Offsets, um das Erreichen oder Einhalten der Führungsgröße bzw. des Zielwerts sicherzustellen.

Das Steuerungsmodell in MATLAB/SIMULINK enthält darüber hinaus ein vereinfachtes Berechnungsmodell zur Abbildung eines Abgasnachbehandlungssystems für die selektive katalytische Reduktion mittels Harnstoff. Darin sind die Eigenschaften zum Light-Off-Verhalten (d. h. u. a. der Verlauf/ die Entwicklung der Konvertierungsrate über der Temperatur), die Mindesttemperatur sowie die Dosiermengenverhältnisse für die Harnstoffeindüsung und die Verschlechterung des Konvertierungsverhaltens bei zu hohen Raumgeschwindigkeiten enthalten. Mithilfe des berechneten Umsetzungswirkungsgrads (begrenzt auf maximal 95%) wird die NOₓ-Emission nach dem SCR-System ermittelt, die sich wiederum als neue Regelgröße verwenden lässt. Speziell für die Regelungsversion **#c** lässt sich somit der Wirkungsgrad der Abgasnachbehandlung berücksichtigen und führt entsprechend der Sollwertvorgabe zur Erhöhung der einzustellenden Stickoxidrohemission.

Die berechnete Minderung der Stickoxide kann für das zurückgeführte Abgas (ND-AGR) und dem damit erreichten Verstärkungseffekt bei der Stickoxidreduzierung vom Berechnungsmodell in diesem Fall nicht beachtet werden.

Nachfolgend werden die Ergebnisse der Untersuchungen zur variablen Motorapplikation am Dieselmotor vorgestellt. Für den Funktionsnachweis dienen zu allererst die zertifizierungsrelevanten Testzyklen: Neuer Europäischer Fahrzyklus (NEFZ), Worldwide harmonized Light vehicles Test Cycle (WLTC), Federal Test Procedure (FTP75), Aggressive Driving Cycle (US06) sowie ein neu entwickelter interner RDE-Zyklus, der die aktuellen, gesetzlichen Anforderungen unter Einhaltung der vorgeschriebenen Randbedingungen erfüllen sollte. Im Anschluss verdeutlichen verschiedene Variationen die universelle Einsatzmöglichkeit der entwickelten Motorbetriebsstrategie.

Die Funktion der Motorbetriebsstrategie kann am Beispiel des NEFZ unter Verwendung eines aktuellen Mittelklassefahrzeugs mit einer Masse von ca. 1,7t demonstriert werden. Es wurden drei Regelungsversionen mit einem Schwerpunkt auf den Ergebnissen der CO₂-, NOₓ- und Rußemission untersucht. Die Betrachtung erfolgte zunächst ohne Berücksichtigung des SCR-Systems. Als Regelgröße diente die streckenspezifische Stickoxidrohemission. Aufgrund der Quotientenbildung für die Regelgröße (Emissionsmasse NOₓ pro Wegeinheit) wurde die Regelung für eine Fahrstrecke *sₘᵢₙ* mit einem Wert von 2km angesetzt. Als Initialisierung diente die Variante V0.3. Bei der betriebspunktabhängigen Regelungsversion **#c** beschränkt sich die Initialisierung auf einen konstanten Wert des nachgeschalteten Offset für die Fahrstrecke *sₘᵢₙ.* Mit allen drei Varianten für die Regelung konnte der definierte NOₓ-Grenzwert in g/km hinreichend genau eingehalten werden. Im Vergleich zur Basis zeigten sich jedoch bzgl. der CO₂- und Ruß-Emission für die Versionen **#a** und **#b** größere Unterschiede, deren Ausmaß maßgeblich an der Einstellung des jeweiligen Reglers gekoppelt war. Dieses Verhalten zeigte sich in allen untersuchten Fahrzyklen (WLTC, etc.). Hintergrund ist eine nur unzureichend mögliche Wahl einer allgemeingültigen Einstellung des PID-Reglers. Das erreichte Ergebnis korreliert mit der Dynamik des Reglers und gleichzeitig mit der Länge des Textzyklus. Damit ergibt sich ein Zielkonflikt für die Reglerkonfiguration.

Das beste Ergebnis konnte mit der Reglungsversion **#c** erzielt werden. Die in erster Näherung geschwindigkeitsabhängige Variantensteuerung erfordert einen deutlich geringeren Regeleingriff und erlaubt vergleichsweise "langsame" Regelparameter mit größerer Zeitkonstante. Hingegen ändert sich für diese Version nahezu für jeden Zeitschritt die verwendete Variante. Zur Beschränkung und Stabilisierung erfolgte die Reglung ausschließlich für Geschwindigkeiten über 2 km/h und Lastzustände über 5 Nm. Anderenfalls wurde die zu verwendende Variante direkt vorgegeben. Der Eingriff des Reglers für das Offset (Regelverhalten) zeigte sich insbesondere in den Stillstandphasen des Fahrzeugs durch die langsame Veränderung der jeweils gewählten Variante.

Darüber hinaus ergab sich bei dieser Variante der Regelung der Vorteil, dass die Wirkung des SCR-Systems direkte Berücksichtigung fand. Deshalb wurde für weitere Untersuchungen ausschließlich diese Variante weiterverfolgt.

Die Funktionsweise der Regelung unter Berücksichtigung des SCR-Systems soll nachfolgend am Beispiel des zukünftigen Zertifizierungszyklus WLTC mit selbiger Fahrzeugkonfiguration erläutert werden. Zu Beginn des Zertifizierungszyklus betrug die Starttemperatur des Motors sowie aller gasführenden Bauteile 25 °C. Für die Funktion des SCR-Systems ist neben der eigentlichen Katalysatortemperatur auch die Gastemperatur am Harnstoffinjektor zu berücksichtigen. Neben der Abgastemperatur spielt auch der mit einem SCR-System erreichte Umsetzungsgrad über der Zykluszeit eine Rolle. Als Führungsgröße für die Regelung wurde ein NOₓ-Zielgrenzwert von 80 mg/km und eine Initialisierungsstrecke *sₘᵢₙ* von 2 km definiert.

Der Light-Off des SCR-Systems wird ca. 750 s nach dem Zyklusstart erreicht. Ab diesem Zeitpunkt ist eine deutliche Erhöhung der Stickoxidrohemission möglich, sodass der Motor mit der verbrauchsgünstigsten Variante betrieben werden kann. Sinkt der Umsetzungsgrad des SCR-Systems (bspw. etwa bei Sekunde 1500) infolge einer hohen Raumgeschwindigkeit im katalytisch beschichteten sDPF aufgrund einer starken Fahrzeugbeschleunigung oder einer zu niedrigen Abgastemperatur, wird sofort die Variante gewechselt und somit dem momentanen Stickoxidrohemissionswert angepasst.

Der wesentliche Vorteil der vorgestellten Motorbetriebsstrategie ergibt sich für den Einsatz im realen Fahrbetrieb. Der gewählte RDE-Zyklus für den Funktionsnachweis teilte sich nahezu gleichmäßig im sogenannten Drittelmix (Stadt, Überland und Autobahn) auf. In Bezug auf die Fahrdynamik lag der Fahrstil im oberen Drittel des zulässigen Bereichs (Werte für v · a_{pos,>0,1}).

Die Einstellungen des Reglers für die Auswahl der Varianten, die sich aus der Optimierung an den Zertifizierungszyklen ergaben, wurden für die hier durchgeführte RDE-Fahrt übernommen. Da für jeden Teilabschnitt die geforderten NOₓ-Grenzwerte einzuhalten sind, wurden diese Einstellungen auch im Verlauf des Zyklus konstant gehalten.

Es wurde zunächst ohne Beachtung des SCR-Systems auf den Stickoxidwert einer Basis und dann mit Beachtung des SCR-Systems auf einen NOₓ-Grenzwert von 80 mg/km und einer zusätzlichen Reserve von 5 % geregelt. Der Motor war, wie voraussichtlich gesetzlich erlaubt, zu Beginn des RDE-Zyklus betriebswarm (T_{Öl}>70°C).

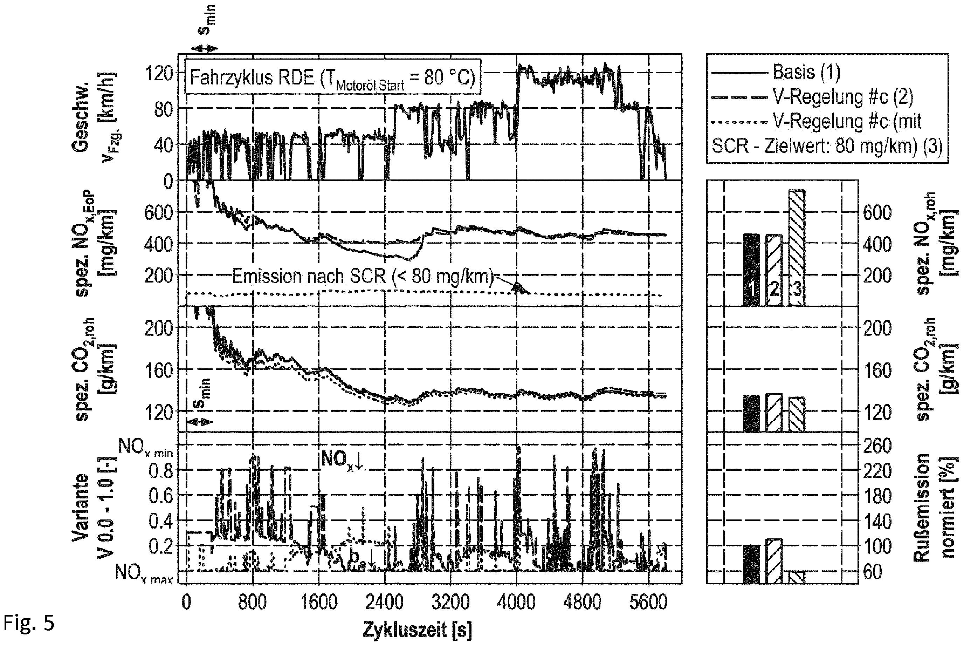

Für den Fall 2 stellte sich aufgrund der bestehenden Regelabweichung nach dem Passieren der Mindeststrecke *sₘᵢₙ* die Variante mit minimaler NOₓ-Emission ein (siehe hierzu auch Figur 5). Ab etwa Sekunde 2600 wurde der NOₓ-Grenzwert unterschritten, sodass sich verbrauchsgünstigere Varianten einstellen ließen. Der Betrieb mit hohen AGR-Raten zu Beginn des Zyklus ließ sich durch eine Anpassung der Regelparameter oder der Erweiterung der Mindeststrecke s*ₘᵢₙ* für den Initialisierungsbereich bzgl. Fahrbarkeit positiv beeinflussen. Folglich würde sich auch eine Abnahme der Rußemission ergeben.

Die betriebswarme Abgasnachbehandlung für den Fall 3 ermöglichte bereits zu Beginn des Zyklus eine Konvertierung der Stickoxide. Somit lässt sich die verbrauchsgünstigste Variante bis auf die Phasen mit starker Fahrzeugbeschleunigung oder zu niedriger Abgastemperatur einstellen. Im zweiten Teil der Stadtphase (1200s bis 2400s) sank die Abgastemperatur aufgrund des Streckenprofils unter 200 °C und reduzierte damit den Umsetzungsgrad des SCR-Systems. Folglich wurde mithilfe höherer AGR-Raten die Stickoxidrohemission zur Einhaltung des NOₓ-Grenzwerts reduziert.

Mithilfe des erfindungsgemäßen Verfahrens ergibt sich der Vorteil, dass sich eine adaptive Anpassung an den jeweiligen momentanen Betriebszustand (Fahrzeug, Fahrer, Fahrprofil, etc.) erreichen lässt, um den vorgegebenen NOₓ-Grenzwert einzuhalten. Eine Variation von Fahrzeugmasse und Schaltverhalten zeigt das Potential des erfindungsgemäßen Verfahrens. Diese Untersuchungen wurden für den erwähnten RDE-Zyklus mit betriebswarmem Motor durchgeführt, wobei für jeden Fall der vorgegebene Grenzwert von 80 mg/km inklusive 5% Reserve eingehalten wurde.

Voruntersuchungen für den RDE-Testzyklus haben gezeigt, dass eine Erhöhung der Fahrzeugmasse um etwa 5% eine Steigerung der CO₂-Emission von ebenfalls etwa 5% bewirkt. Mithilfe des erfindungsgemäßen Verfahrens kann der höhere Wirkungsgrad des SCR-Systems aufgrund des Anstiegs der Abgastemperatur berücksichtigt werden. Folglich lässt sich die Erhöhung des Kraftstoffverbrauchs auf die Hälfte begrenzen. Gleichzeitig ergibt sich jedoch ein höherer Verbrauch des eindosierten Harnstoffs. Es ist eine kostenspezifische Optimierung bzgl. Kraftstoffeinsparung und Harnstoffmehrverbrauch möglich. Für eine veränderte Schaltstrategie trifft dies ebenfalls zu. Das dynamische Schaltverhalten mit höheren Schaltdrehzahlen reduziert den Wirkungsbereich des SCR-Systems. Zur Einhaltung des NOₓ-Grenzwerts wird die Stickoxidrohemission in der Regel zum Nachteil des Kraftstoffverbrauchs reduziert.

Mit der Erfindung können momentan geltende und zukünftige Zertifizierungsverfahrens für Pkw-Neufahrzeuge berücksichtigt werden. Die Einhaltung der gesetzlich vorgeschriebenen NOₓ-Grenzwerte im realen Fahrbetrieb gestaltet sich als äußerst schwierig. Eine Anpassung der bisherigen Motorapplikation, die alle möglichen Randbedingungen und Einflüsse abdeckt, kann hinsichtlich der Ansprüche von Fahrbarkeit und niedrigem Kraftstoffverbrauch nur sehr schwer realisiert werden. Der vorgeschlagene Übergang von der fahrzeugindividuellen, nahezu unveränderlichen Motorsteuerung hin zur adaptiven, universellen Regelung mit Einhaltung des NOₓ-Grenzwerts im Zertifizierungstest und auch bei einem RDE-Zyklus ist ein wesentlicher Schritt in die gewünschte Richtung. Je nach Fahrzeugzustand, Fahrverhalten und Umweltrandbedingungen kann die Motorsteuerung in geregelter Form angepasst werden. Gleichzeitig stellt das erfindungsgemäße Verfahren unter Berücksichtigung des Abgasnachbehandlungssystems und der NOₓ-Emission als Kompromiss die bestmögliche Fahrdynamik und CO₂-Emission sicher. Infolgedessen ist für jeden Motor nur noch eine Verfahrensführung in vom jeweils momentan berechneten oder gemessenen NOₓ-Wert erforderlich und die bisher übliche fahrzeugspezifische Modifikation hinfällig.

## Patentansprüche

1. Verfahren zum Betreiben einer in einem Fahrzeug installierten Verbrennungskraftmaschine, insbesondere eines Dieselmotors, bei dem die momentane Konzentration eines im Abgas enthaltenen Schadstoffes, insbesondere die NOₓ-Konzentration im Abgas in Strömungsrichtung nach einer Abgasnachbehandlung gemessen oder berechnet wird und
mit der bestimmten Schadstoffkonzentration die vorgegebene streckenbezogeneEinhaltung von Schadstoffgrenzwerten in mg/km durch gezielte Beeinflussung der Betriebsparameter der Verbrennungskraftmaschine und/oder einer Abgasnachbehandlungsanlage in geregelter Form so überwacht wird, dass der Schadstoffgrenzwert kumulativ über eine vorgegebene Mindestfahrstrecke eingehalten wird und
für die Regelung in der Motorsteuerung hinterlegte Motorkennfelder, die unterschiedliche Varianten für den Betrieb der Verbrennungskraftmaschine berücksichtigen, genutzt werden und eine Auswahl einer Variante bei der Regelung mit einer Umrechnung der Führungsgröße in einen betriebspunktabhängigen Sollwert für die Rohemission in [g/(kW·h)] in Abhängigkeit einer hinterlegten Fahrwiderstandskurve durchgeführt wird.

2. Verfahren nach Anspruch 1, **dadurch gekennzeichnet, dass** neben der momentanen Schadstoffkonzentration auch der momentane und/oder der entsprechend der jeweiligen Fahrsituation in Abhängigkeit vom jeweiligen Fahrstil, jeweiligen Fahrzeug, Fahrzeugzustand und Umwelteinflüssen vorhersehbare Kraftstoffverbrauch beim geregelten Betrieb der Verbrennungskraftmaschine berücksichtigt wird.

3. Verfahren nach Anspruch 1 oder 2, **dadurch gekennzeichnet, dass** der momentane Zustand der Abgasnachbehandlungsanlage, insbesondere deren Alterung, die Kraftstoffqualität und/oder die Menge, Art und/oder Qualität der Abgasnachbehandlung für eine Schadstoffreduktion zugeführten chemischen Verbindung bei der Regelung berücksichtigt wird/werden.

4. Verfahren nach einem der vorhergehenden Ansprüche, **dadurch gekennzeichnet, dass** bei der Regelung eine Beeinflussung der eingespritzten Kraftstoffmenge, des Einspritzzeitpunktes, die Art der Kraftstoffeinspritzung, der Ladedruck zugeführter Verbrennungsluft, die Temperatur der Verbrennungsluft, der Temperatur und/oder der Menge an rückgeführtem Abgas, der Ventilsteuerzeiten oder des Motorverdichtungsverhältnisses durchgeführt wird.

5. Verfahren nach einem der vorhergehenden Ansprüche, **dadurch gekennzeichnet, dass** bei der Regelung ein der jeweiligen Uhrzeit und/oder jeweiligen Fahrzeugposition zugeordneter Schadstoffgrenzwert berücksichtigt wird.

6. Verfahren nach einem der vorhergehenden Ansprüche, **dadurch gekennzeichnet, dass** bei der Regelung eine Interpolation durchgeführt wird, wenn kein dem jeweiligen Betriebszustand der Verbrennungskraftmaschine entsprechendes Motorkennfeld vorhanden ist.

7. Verfahren nach einem der vorhergehenden Ansprüche, **dadurch gekennzeichnet, dass** eine Regelung so erfolgt, dass ein vorgegebener Schadstoffgrenzwert ab einer Fahrstrecke von mindestens 2 km eingehalten wird.

## Claims

1. A method for operating an internal combustion engine installed in a vehicle, in particular a diesel engine, wherein the instantaneous concentration of a pollutant present in the exhaust gas, in particular the NOx concentration in the exhaust gas, is measured or calculated in the flow direction after an exhaust gas aftertreatment, and
using the determined pollutant concentration, the predefined distance-based compliance with pollutant limiting values in mg/km is monitored by specifically influencing the operating parameters of the internal combustion engine and/or of an exhaust gas aftertreatment system in regulated form, so that the pollutant limiting value is cumulatively adhered to across a specified minimum driving distance, and
engine characteristic maps stored in the engine control system, which take different variants into consideration for the operation of the internal combustion engine, are used for the regulation,
and a selection of a variant is carried out during the regulation with a conversion of the reference variable into an operating point-dependent target value for the raw pollutant emission in [g/(kW.h)] depending on a stored driving resistance curve.

2. The method according to claim 1, **characterized in that**, in addition to the instantaneous pollutant concentration, also the instantaneous fuel consumption and/or the foreseeable fuel consumption corresponding to the respective driving situation, depending on the respective driving style, the respective vehicle, vehicle status, and environmental factors, is taken into consideration during the regulated operation of the internal combustion engine.

3. The method according to claim 1 or 2, **characterized in that** the instantaneous status of the exhaust gas aftertreatment system, in particular its aging, the fuel quality and/or the quantity, type and/or quality of the chemical compound added to the exhaust gas aftertreatment for a pollutant reduction is/are taken into consideration during the regulation.

4. The method according to any one of the preceding claims, **characterized in that**, during the regulation, the injected fuel quantity, the point in time of injection, the type of fuel injection, the boost pressure of added combustion air, the temperature of the combustion air, the temperature and/or the quantity of recirculated exhaust gas, the valve timing or the engine compression ratio is/are influenced.

5. The method according to any one of the preceding claims, **characterized in that**, during the regulation, a pollutant limiting value assigned to the respective time and/or respective vehicle position is taken into consideration.

6. The method according to any one of the preceding claims, **characterized in that**, during the regulation, an interpolation is carried out if no engine characteristic map corresponding to the respective operational state of the internal combustion engine is available.

7. The method according to any one of the preceding claims, **characterized in that** a regulation takes place in such a way that a predefined pollutant limiting value starting at a distance of at least 2 km is adhered to.

## Revendications

1. Procédé pour faire fonctionner un moteur à combustion interne installé dans un véhicule, notamment un moteur Diesel, chez lequel la concentration instantanée d'un polluant contenu dans le gaz d'échappement, notamment la concentration en NOₓ dans le gaz d'échappement, est mesurée ou calculée dans le sens de l'écoulement après un post-traitement du gaz d'échappement, et
le respect prédéfini en rapport avec le trajet des valeurs limites de polluants en mg/km est surveillé à l'aide de la concentration en polluant déterminée par une influence ciblée sur les paramètres de fonctionnement du moteur à combustion interne e/ou d'une installation de post-traitement des gaz d'échappement sous une forme régulée, de sorte que la valeur limite en polluant est respectée de manière cumulative sur un trajet minimal prédéfini, et
des caractéristiques du moteur consignées pour la régulation dans la commande du moteur, qui tiennent compte de diverses variables sont employées pour le fonctionnement du moteur à combustion interne
et une sélection d'une variable lors de la régulation avec un nouveau calcul de la grandeur principale dans une valeur souhaitée dépendant du point de fonctionnement pour l'émission brute en [g/(kW.h)] est effectuée en fonction d'une courbe de résistance au roulement consignée.

2. Procédé selon la revendication 1, **caractérisé en ce qu'**en plus de la concentration en polluants instantanée, on tient également compte de la consommation de carburant prévisible instantanée et/ou des conditions de conduite respectives en fonction du style de conduite respectif du véhicule, de l'état du véhicule et des effets environnementaux pour un fonctionnement régulé du moteur à combustion interne.

3. Procédé selon la revendication 1 ou la revendication 2, **caractérisé en ce que** l'état instantané de l'installation de traitement des gaz d'échappement, notamment son vieillissement, la qualité du carburant et/ou la quantité, le type et/ou la qualité du post-traitement des gaz d'échappement doit/doivent entrer en ligne de compte pour une réduction en polluants de composés chimiques lors de la régulation.

4. Procédé selon l'une des revendications précédentes, **caractérisé en ce que**, lors de la régulation, on exécute une influence sur la quantité de carburant injectée, sur le moment de l'injection, sur le type d'injection du carburant, sur la pression de charge de l'air de combustion amené, sur la température de l'air de combustion et/ou sur la quantité de gaz d'échappement recyclée, sur les calages des soupapes ou sur le taux de compression du moteur.

5. Procédé selon l'une des revendications précédentes, **caractérisé en ce qu'**il est tenu compte, lors de la régulation, d'une valeur limite de polluants associée à un horaire respectif et/ou à une position de véhicule respective.

6. Procédé selon l'une des revendications précédentes, **caractérisé en ce qu'**on exécute une interpolation lors de la régulation lorsqu'aucune caractéristique de moteur correspondant à l'état de fonctionnement respectif du moteur à combustion interne n'est présente.

7. Procédé selon l'une des revendications précédentes, **caractérisé en ce qu'**une régulation a lieu de sorte qu'une valeur limite de polluant pré-définie est maintenue à partir d'un parcours d'au moins 2 km.
